# EUROPÄISCHE PATENTSCHRIFT

(11) **EP 2 191 172 B1**
(45) Veröffentlichungstag und Bekanntmachung des Hinweises auf die Patenterteilung: **20.07.2011**
(21) Anmeldenummer: 08786759.4
(22) Anmeldetag: 01.08.2008
(51) Int. Cl.: F16H 61/30

(54) **SCHALTEINHEIT FÜR EIN SCHALTGETRIEBE EINES KRAFTFAHRZEUGS**
SHIFT UNIT FOR A MANUAL TRANSMISSION OF A MOTOR VEHICLE
UNITÉ DE CHANGEMENT DE VITESSE POUR BOÎTE DE VITESSES D 'UN VÉHICULE AUTOMOBILE

(30) Priorität: 05.09.2007 DE 102007042212
(43) Veröffentlichungstag der Anmeldung: 02.06.2010
(73) Patentinhaber: Schaeffler Technologies GmbH & Co. KG, 91074 Herzogenaurach (DE)
(72) Erfinder: KRÄMER, Klaus, 91460 Baudenbach (DE); LÖFFELMANN, Jochen, 96158 Frensdorf (DE)
(86) Internationale Anmeldenummer: PCT/EP2008/060139
(87) Internationale Veröffentlichungsnummer: WO 2009/030558

(56) Entgegenhaltungen:
- EP-A- 1 081 418
- WO-A-03/038316
- WO-A-03/038318
- DE-A1-102006 058 230
- FR-A- 2 866 838
- JP-A- 2005 180 576

## Beschreibung

### Gebiet der Erfindung

Die Erfindung betrifft eine Schalteinheit in dem Schaltgetriebe eines Kraftfahrzeugs mit zumindest einer Schaltwelle, wobei auf dieser zumindest ein Schalthebel zur Übertragung eines Drehmoments auf die Schaltwelle und zumindest ein Eingriffselement zur Übertragung einer Schaltkraft oder Wählkraft in Längsachsenrichtung der Schaltwelle angeordnet sind. So eine Schalteinheit ist aus der gattungsgemäßen JP 2005180576A bekannt.

Eine andere Schalteinheit ist aus DE 196 36 506 A1 bekannt. Dort ist am Eine andere Schalteinheit ist aus DE 196 36506 A1 bekannt. Dort ist am Ende einer Schaltwelle ein mit dieser fest verbundener Schalthebel angeordnet, der der Übertragung einer Drehbewegung auf die Schaltwelle zur Betätigung eines Schaltfingers zum Ein- und Ausrücken der Gänge dient. Der Schalthebel ist an einem Ende der Schaltwelle aufgesteckt und über ein Vierkantprofil an der Schaltwelle verstemmt oder verschweißt. Über eine mit der Schaltwelle fest verbundene Gelenkanordnung kann ein Wählhebel an der Schaltwelle angreifen. Die Hülse ist mit längsaxialem Abstand zum Schalthebel auf der Schaltwelle aufgepresst oder auf dieser verstiftet. Der Hebelarm des Wählhebels greift über einen Gleitstein o.ä. in eine an der Gelenkanordnung ausgebildete Nut ein. Dabei wird eine vom Hebelarm des Wählhebels übertragene Schwenkbewegung in eine hin- und hergehende Verschiebbewegung der Schaltwelle in Längsachsenrichtung umgewandelt.

WO 03/038316 zeigt eine Vorrichtung zur Erzeugung von Schaltkräften, bei der eine Schaltwelle einen Schwenkhebel und eine Buchse aufweist, wobei der Schwenkhebel und die Buchse durch einen Stift beim Verdrehen der Schaltwelle miteinander gekoppelt sind, während der Stift beim axialen Verschieben des Schwenkhebels zur Buchse in einer Nut der Buchse gleitet.

Bei dieser Ausführungsform bedingt die komplizierte und aufwendige Verbindung des Schalthebels mit der Schaltwelle durch Pressverbände, Verstiften oder Schweißen einen großen Montage- und Kostenaufwand. Weiterhin erfordert die Ausgestaltung der Gelenkanordnung zur Ausbildung der Nut für den Hebeleingriff die Bildung von zwei kragenförmigen Aufweitungen an den Enden der Gelenkanordnung. Eine solche Ausgestaltung ist schwierig und nur aufwendig herstellbar.

### Zusammenfassung der Erfindung

Der Erfindung liegt daher die Aufgabe zugrunde, eine Schalteinheit der vorgenannten Art hinsichtlich ihres Aufbaues zu vereinfachen und kostengünstig zu gestalten. Die Aufgabe wird durch die Merkmale des Anspruchs 1 und alternativ durch die Merkmale des Anspruchs 6 gelöst.

Erfindungsgemäß können der Schalthebel und das Eingriffselement auf der Schaltwelle einfach koaxial aufgesteckt und längsaxial aneinander anliegend drehfest mit der Schaltwelle verspannt werden. Hierdurch ist die Schalteinheit einfach aufgebaut und kann auf einfache Weise betriebssicher montiert werden. Diese Verbindungstechnik erlaubt auch eine Ausführung von Schalthebel und Eingriffselement als einfache ggf. mit unterschiedlicher Stärke ausgebildete und auf der Schaltwelle aneinander angelegt angeordnete Blechteile. Eine Lockerung der Verbindung mit der Schaltwelle im Betrieb kann durch eine drehfeste Verspannung von Schalthebel und Eingriffselement auf der Schaltwelle sicher vermieden werden. Aufwendige und funktionskritische Pressverbände oder ein aufwendiges Verstiften der einzelnen Teile, die weitere Montageschritte erforderlich machen würden, sind nicht erforderlich. Zur Verspannung des Schalthebels und des Eingriffselements auf der Schaltwelle kann jedes axiale Sicherungselement vorgesehen sein, durch das eine zur drehfesten Verbindung von Schalthebel und Eingriffselement mit der Schaltwelle ausreichende axiale Vorspannung erzeugt werden kann. Vorzugsweise ist der Schalthebel an einem Ende der Schaltwelle gegen ein in Längsachsenrichtung anliegendes Ende des seinerseits auf der Schaltwelle längsaxial fixierten Eingriffselements verspannt angeordnet. Auf diese Weise kann der Schalthebel zur Übertragung eines Drehmoments gegen ein Verdrehen und gleichzeitig das Eingriffselement zur Übertragung einer axialen Schaltkraft gegen ein Verschieben auf der Schaltwelle gesichert werden. Vorzugsweise wird der Schalthebel formschlüssig auf die Schaltwelle aufgesteckt. Hierzu kann insbesondere eine zweiflachige Ausnehmung am Schalthebel vorgesehen sein, mit der dieser auf ein an der Schaltwelle ausgebildetes Zweiflachprofil aufgesetzt wird. Denkbar ist aber auch jede andere formschlüssige Verbindung, bei der der Schalthebel drehfest auf die Schaltwelle aufgesteckt werden kann wie z. B. ein Vierkant- oder ein Sechskantprofil oder eine Verzahnung.
Da die zu verbindenden Teile einfach aufgesteckt und miteinander verspannt werden, können sie einzeln unabhängig voneinander je nach Anforderung unterschiedlich vorbehandelt, beispielsweise beschichtet oder gehärtet, oder auch unbehandelt belassen werden.. Hierdurch ist es insbesondere möglich, den Schalthebel und das Eingriffselement ohne eine Beeinflussung der Schaltwelle einzeln zu härten.

Erfindungsgemäß sind der Schalthebel und das Eingriffselement aneinander anliegend über eine Schraubenverbindung mit der Schaltwelle verschraubt und längsaxial verspannt auf dieser angeordnet. Durch die Klemmkraft der Schraubenverbindung werden der Schalthebel und das Eingriffselement drehfest und verschiebefest mit der Schaltwelle betriebssicher verbunden.

Vorzugsweise ist die Schraubenverbindung an einem Ende der Schaltwelle vorgesehen. Hierzu ist das Ende der Schaltwelle mit einem Außengewinde ausgebildet, auf dem eine Mutter mit einem Innengewinde aufgeschraubt werden kann. Auf diese Weise kann der Schalthebel zusammen mit dem anliegenden Eingriffselement einfach an einem Ende der Schaltwelle mittels der Mutter auf dieser verschraubt werden. Alternativ kann statt der Mutter ein Innengewindebolzen vorgesehen sein, der auf das Ende der Schaltwelle aufgeschraubt wird. Denkbar ist auch, an einem Ende der Schaltwelle ein Innengewinde vorzusehen, in das eine Schraube eingeschraubt werden kann, über die der Schalthebel und das anliegende Eingriffselement gesichert werden.

Erfindungsgemäß ist an der Schaltwelle zumindest eine Stufe mit einem eingezogenen Durchmesser ausgebildet, an die das Eingriffselement mit einem seiner Enden längsaxial angelegt wird. Hierdurch ist es möglich, das auf die Schaltwelle aufgesteckte Eingriffselement auf einfache Weise in Längsachsenrichtung auf dieser zu fixieren und den Schalthebel gegen das anliegende und längsaxial gesicherte Eingriffselement zu verspannen. Auf diese Weise kann auf ein zusätzliches axiales Sicherungselement zur Fixierung des Eingriffselements verzichtet werden.

Alternativ kann auch vorgesehen sein, ein Ende der Schaltwelle plastisch zu verformen bis es am Schalthebel anliegt und dieser längsaxial fixiert wird. Insbesondere kann ein Ende der Schaltwelle mittels Druckumformens verprägt werden, um den auf die Schaltwelle aufgesteckten Schalthebel mit dem anliegenden Eingriffselement auf diese Weise an einem Ende der Schaltwelle längsaxial zu fixieren.

In einer weiteren alternativen Ausgestaltung können Schalthebel und Eingriffselement durch zumindest einen an dem Schalthebel und/oder dem Eingriffselement anliegenden in einer Nut an der Schaltwelle angeordneten Sicherungsring- oder eine Sicherungsscheibe auf der Schaltwelle fixiert werden. Denkbar ist auch, dass der Schalthebel und das Eingriffselement an ihren freiliegenden äußeren Enden jeweils durch eine anliegende Sicherungsring- oder Sicherungsscheibenverbindung auf der Schaltwelle verspannt sind.

Nach einer bevorzugten Ausführungsform ist der Schalthebel einteilig und ungebogen ausgeführt. Hierdurch ist der Schalthebel, insbesondere als Blechteil, einfach herstellbar und beansprucht wenig Bauraum. Vorzugsweise ist er, angepasst an die Beanspruchung im Betrieb, ausgehend von seinem an der Schaltwelle aufgesteckten Endabschnitt zu seinem von diesem in Längsachsenrichtung des Schalthebels abgewandten Endabschnitt am anderen Hebelende hin quer zu seiner Längsachse mit kontinuierlich geringer werdendem Außenmaß material- und bauraumsparend ausgeführt. Dabei weist die Außenkontur insbesondere eine annähernd ovale Form auf.

Nach einem weiteren Aspekt der Erfindung ist das Eingriffselement als eine hohlzylindrische Hülse mit einem an einem Ende ausgebildeten radial überstehenden Kragen ausgeführt. Die Hülse kann einfach zusammen mit dem Schalthebel auf die Schaltwelle aufgesteckt werden. Vorzugsweise ist die Hülse als rotationssymmetrisches Bauteil ausgeführt und ist insbesondere als Blechteil besonders einfach herstellbar.

Vorzugsweise liegt die Hülse mit ihrem vom Kragen abgewandten Ende am Schalthebel an und bildet zwischen diesem und dem Kragen einen ringförmigen Zwischenraum als Eingriffsnut aus, in die beispielsweise ein Wählhebel zur Übertragung einer Verschiebebewegung in Längsachsenrichtung der Schaltwelle eingreifen kann. Hierdurch ist es möglich, das Eingriffselement als einfache Hülse mit nur einem Kragen auszuführen, der an einem Ende eine längsaxiale Eingriffskante der Eingriffsnut bildet, während erfindungsgemäß die andere Eingriffskante der Eingriffsnut durch den am anderen Ende der Hülse anliegenden Schalthebel gebildet wird.

Die Hülse weist erfindungsgemäß einen nach radial innen weisenden Abschnitt auf, über den die Hülse an der Schaltwelle anlegbar ist. Vorzugsweise ist die Hülse über den nach radial innen weisenden Abschnitt an einem stufig ausgebildeten Bereich der Schaltwelle in Längsachsenrichtung anlegbar. Hierdurch wird auf einfache Weise eine betriebssichere längsaxiale Fixierung der Hülse auf der Schaltwelle ermöglicht.

Erfindungsgemäß wird der nach radial innen weisende Abschnitt durch ein nach innen gewölbtes Ende der Hülse gebildet. Das nach radial innen gewölbte Ende der Hülse bildet zwei voneinander abgewandte längsaxiale, ringförmige Anlageflächen aus. Vorzugsweise ist das vom Kragen abgewandte Ende der Hülse nach innen gewölbt ausgebildet. Hierdurch kann die Hülse mit ihrem nach radial innen gewölbten Ende zwischen dem Schalthebel und einer an der Schaltwelle ausgebildeten Stufe längsaxial verspannt werden. Dabei liegt das nach innen gewölbte Ende der Hülse mit seinen voneinander abgewandten längsaxialen Anlageflächen einerseits am Schalthebel und andererseits an der Stufung der Schaltwelle ringförmig an. Hierdurch können der Schalthebel und die Hülse auf der Schaltwelle in einfacher Weise betriebssicher drehfest miteinander verspannt werden. Durch die erfindungsgemäße Ausgestaltung als hohlzylindrisches Bauteil mit einem am einen Ende ausgebildeten Kragen und dem nach innen gewölbten Abschnitt am anderen Ende wird eine topfartige Formgebung der Hülse erreicht, die besonders einfach herstellbar ist.

Vorzugsweise ist die Hülse als ein einfaches Blechteil ausgeführt und in einem blechverarbeitenden Verfahren einfach herstellbar. Die Hülse kann insbesondere durch Tiefziehen hergestellt werden. Hierbei wird das Blech mit einem Ziehrand gezogen und an dem dem Ziehrand abgewandten längsaxialen Ende gelocht. Dabei bildet der Ziehrand den radial überstehenden Kragen an einem Ende der Hülse. Auf diese Weise ist die erfindungsgemäße topfartig ausgebildete Hülse in einem Schritt und mit einem Werkzeug herstellbar.

### Kurze Beschreibung der Zeichnungen

Weitere Merkmale der Erfindung ergeben sich aus der nachfolgenden Beschreibung und aus den Zeichnungen, in denen ein Ausführungsbeispiel der Erfindung vereinfacht dargestellt ist. Es zeigen:
- Figur 1:: eine perspektivische Darstellung der Schalteinheit,
- Figur 2:: einen Längsschnitt der Schalteinheit,
- Figur 3:: einen perspektivisch dargestellten Ausschnitt der Schaltwelle,
- Figur 4:: eine perspektivische Darstellung des Schalthebels.

### Ausführliche Beschreibung der Zeichnungen

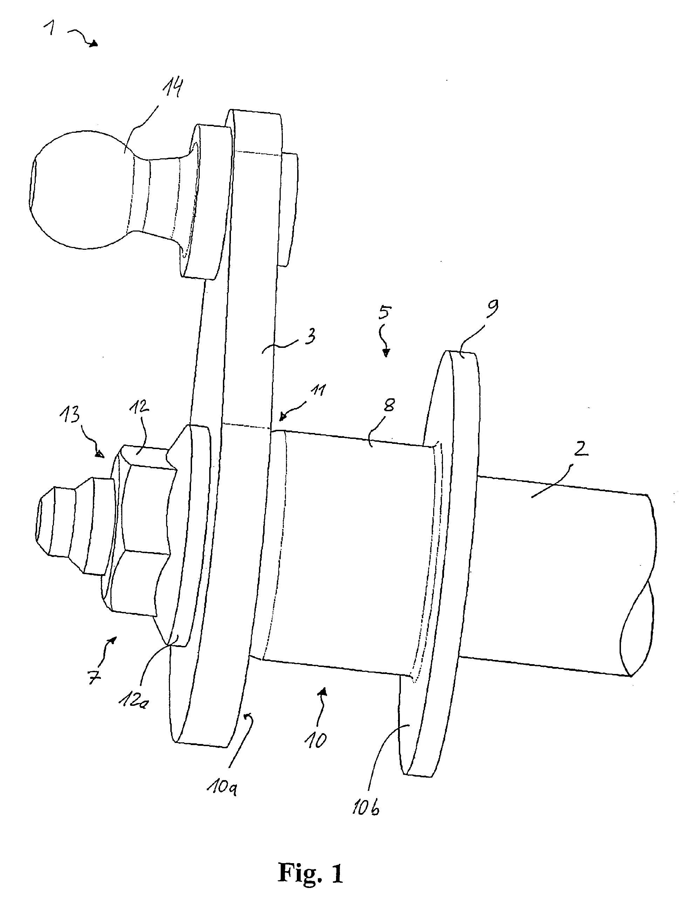

Figur 1 zeigt in einer perspektivischen Darstellung eine Ausgestaltung der erfindungsgemäßen Schalteinheit 1. Die Schalteinheit 1 besteht aus einem Schalthebel 3 und einer Hülse 8, die auf der Schaltwelle 2 koaxial angeordnet sind. An einem Endabschnitt der Schaltwelle 2 ist eine Schraubenverbindung 7 vorgesehen. Die Schraubenverbindung 7 weist eine Mutter 12 mit einem Innengewinde auf, die an dem mit einem Außengewinde versehenen Gewindeabschnitt 13 der Schaltwelle 2 anliegend am Schalthebel 3 aufgeschraubt ist. Die Mutter 12 verspannt den Schalthebel 3 drehfest mit der an diesem anliegenden Hülse 8 auf der Schaltwelle 2. Am von der Schaltwelle 2 abgewandten Ende des Schalthebels 3 ist ein Kugelkopf 14 zur Betätigung des Schalthebels 3 angebracht. Über den Schalthebel 3 kann durch einen nicht dargestellten Betätigungsmechanismus ein Drehmoment auf die Schaltwelle 2 übertragen werden. Die Hülse 8 ist mit ihrem Ende 11 unmittelbar anliegend am Schalthebel 3 angeordnet. Am anderen Ende der Hülse 8 ist ein nach radial außen überstehender ringförmiger Kragen 9 ausgebildet. Der durch den Kragen 9 einerseits und durch den am Ende 11 anliegenden Schalthebel 3 andererseits begrenzte ringförmige Zwischenraum bildet eine Eingriffsnut 10 an der Schaltwelle 2. In die Eingriffsnut 10 kann ein nicht dargestellter Betätigungsmechanismus, insbesondere ein Wählhebel, eingreifen und eine Schalt- oder Wählkraft in Längsachsenrichtung auf die Schaltwelle 2 übertragen. Der Schalthebel 3 bildet auf der einen Seite und der Kragen 9 auf der anderen Seite jeweils eine längsaxiale ringförmige Seitenkante 10a, 10b der Eingriffsnut 10. Durch die an einer der gegenüberliegenden Seitenkanten 10a, 10b angreifende Schaltkraft kann die Schaltwelle 2 in Längsachsenrichtung hin und her verschoben werden.

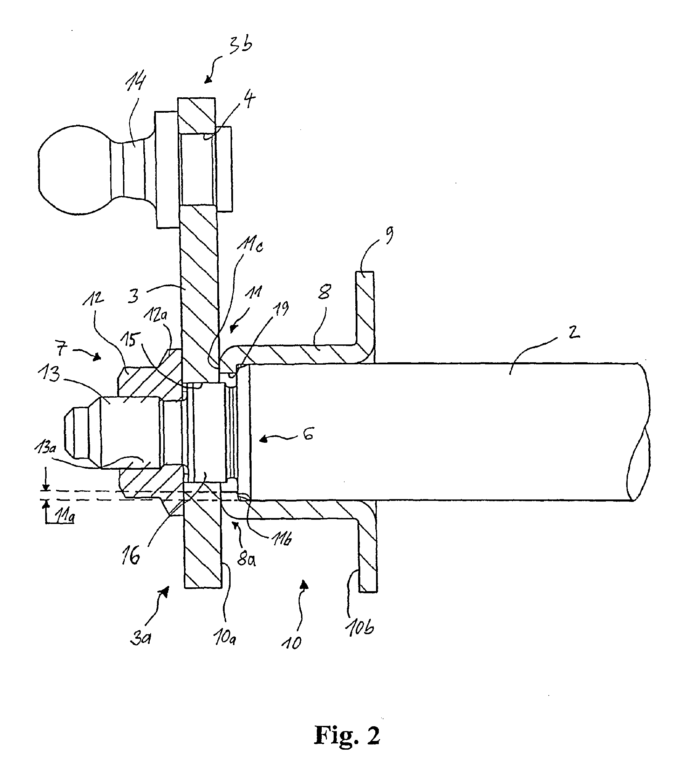

In Figur 2 ist die Schalteinheit 1 in einem Längsschnitt dargestellt. Der Schalthebel 3 ist an einer Ausnehmung 15 auf einem an der Schaltwelle 2 ausgebildeten Zweiflachprofil 16 aufgesteckt und dadurch mit der Schaltwelle 2 drehfest verbunden. Am von der Schaltwelle 2 abgewandten Ende des Schalthebels 3 ist in einer Durchgangsbohrung 4 der Kugelkopf 14 vernietet angebracht. Die Hülse 8 umschließt, ausgehend vom Kragen 9, topfartig die Schaltwelle 2 in Längsachsenrichtung bis zu ihrem vom Kragen 9 abgewandten Ende 11. Dort ist die Hülse 8 an einem Loch 19 auf der Schaltwelle 2 aufgesteckt. Das Ende 11 ist nach innen gewölbt und weist einen nach radial innen weisenden ringförmigen Überstand 11a auf. Der radiale Überstand 11a bildet zwei voneinander abgewandte ringförmige längsaxiale Anlageflächen 11 b, 11 c, über die die Hülse 8 am Ende 11 einerseits am Schalthebel 3 und andererseits an der Stufe 6 angelegt ist. Auf diese Weise ist die Hülse 8 am Überstand 11a unmittelbar anliegend am Schalthebel 3 und an der Stufe 6 auf der Schaltwelle 3 längsaxial fixiert. Dabei ist der Schalthebel 3 auf seiner von der Hülse 8 abgewandten Seite durch die am Ende der Schaltwelle 2 angeordneten Schraubenverbindung 7 drehfest auf der Schaltwelle 2 längsaxial fixiert. Die Mutter 12 der Schraubenverbindung 7 ist am Gewindeabschnitt 13 an dem an der Schaltwelle 2 angedeuteten Gewinde 13a aufgeschraubt. An ihrer dem Schalthebel 3 zugewandten Seite ist die Mutter 12 über einen Bund 12a am Schalthebel 3 mit einer Vorspannkraft bündig angelegt. Hierdurch wird der auf das Zweiflachprofil 16 aufgesteckte Schalthebel 3 mit der anliegenden Hülse 8 über die Schraubenverbindung 7 auf der Schaltwelle 2 drehfest verklemmt. Der Kragen 9 und der Schalthebel 3 bilden jeweils eine der längsaxialen Seitenkanten 10a, 10b der Eingriffsnut 10 als Angriffsflächen zur Übertragung der längsaxial wirkenden Schaltkraft auf die Schaltwelle 2.

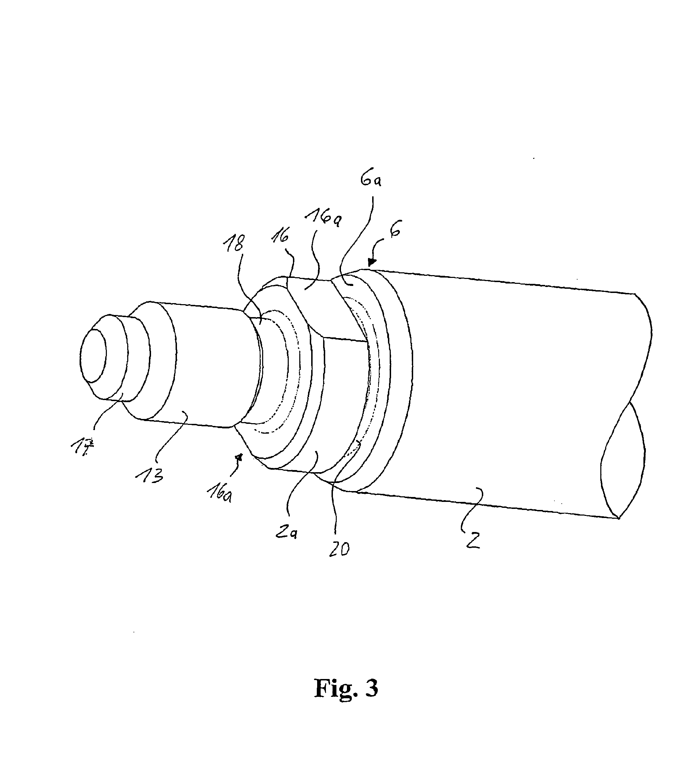

Figur 3 zeigt in einer perspektivischen Darstellung einen Endabschnitt der Schaltwelle 2. Die Schaltwelle 2 weist an ihrem Ende ein Gewindeabschnitt 13 mit einem Gewindeüberstand 17 auf. Der Gewindeabschnitt 13 ist als ein an der Schaltwelle 2 abgesetztes Bolzengewinde ausgeführt. Am Ende des Gewindeabschnitts 13 ist ein erster Freistich 18 vorgesehen, der einerseits als Auslaufzone bei der Herstellung des Gewindeabschnitts 13 dient und andererseits das bündige Aufschrauben der Mutter 12 am Schalthebel 3 auf der Schaltwelle 2 gewährleistet. Am Freistich 18 schließt sich ein mit eingezogenem Durchmesser abgesetzter Abschnitt 2a der Schaltwelle 2 an. Der Abschnitt 2a weist am Außenumfang der Schaltwelle 2 zwei symmetrisch zueinander, gegenüberliegend angeordnete Abflachungen 16a auf, die an der Schaltwelle 2 ein Zweiflachprofil 16 zur Aufnahme des Schalthebels 3 ausbilden. Ein zweiter Freistich 20 an der dem Ende der Schaltwelle 2 abgewandten Seite des Abschnitts 2a schafft einen Freiraum zur Herstellung der Abflachungen 16a an der Schaltwelle 2, insbesondere durch Stoßen. Der Freistich 20 bildet gleichzeitig eine Stufe 6 an der Schaltwelle 2 mit einer ringförmigen längsaxialen Anlagefläche 6a aus. Der verwendete Radius des Freistichs 20 reduziert zudem die Spannungsspitzen, die durch die Absätze in der Drehkontur und deren Kerbwirkung an dem Abschnitt 2a und der Stufe 6 entstehen.

Der Außendurchmesser der Schaltwelle 2 ist am Gewindeabschnitt 13 und am Abschnitt 2a jeweils derart bemessen, dass einerseits der Schalthebel 3 mit der Ausnehmung 15 über den Gewindeabschnitt 13 geführt und auf dem Zweiflachprofil 16 am Abschnitt 2a aufgesteckt, sowie andererseits die Hülse 8 an ihrem Ende 11 mit dem nach radial innen weisende Überstand 11 a am Schalthebel 3 und der Anlagefläche 6a der Stufe 6 längsaxial angelegt und verspannt werden kann.

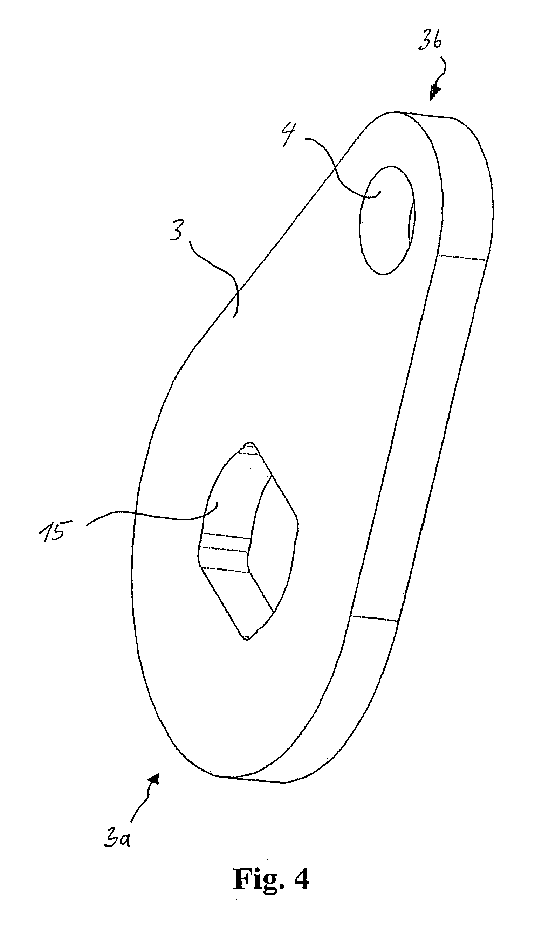

In Figur 4 ist der Schalthebel 3 perspektivisch dargestellt. Der Schalthebel 3 ist einteilig und eben ohne eine Biegekante ausgeführt und weist an einem Hebelende einen Endabschnitt 3a mit einer zweiflachigen Ausnehmung 15 und einen Endabschnitt 3b mit der Durchgangsbohrung 4 zur Aufnahme des Kugelkopfs 14 am anderen Hebelende auf. Die Ausnehmung 15 ist komplementär zu dem Zweiflachprofil 16 an der Schaltwelle 2 ausgebildet. Über die Ausnehmung 15 kann der Schalthebel 3 einfach auf das Zweiflachprofil 16 an der Schaltwelle 2 formschlüssig aufgesteckt werden. Der Schalthebel 3 ist jeweils an den Stirnseiten der Endabschnitte mit halbkreisförmig abgerundeten Rändern ausgeführt. Ausgehend vom Endabschnitt mit der Ausnehmung 15 zu dem Endabschnitt mit der Durchgangsbohrung 4 hin ist der Schalthebel 3 mit einem kontinuierlich geringer werdenden Außenmaß ausgebildet. Insgesamt weist der Schalthebel 3 eine annähernd ovale Außenkontur auf.

### Bezugszeichen

- 1: Schalteinheit
- 2: Schaltwelle
- 3: Schalthebel
- 3a: Endabschnitt
- 3b: Endabschnitt
- 4: Durchgangsbohrung
- 5: Eingriffselement
- 6: Stufe
- 6a: Anlagefläche
- 7: Schraubenverbindung
- 8: Hülse
- 9: Kragen
- 10: Eingriffsnut
- 10a: Seitenkante
- 10b: Seitenkante
- 11: Ende
- 11a: Überstand
- 11b: Anlagefläche
- 11 c: Anlagefläche
- 12: Mutter
- 12a: Bund
- 13: Gewindeabschnitt
- 13a: Gewinde
- 14: Kugel kopf
- 15: Ausnehmung
- 16: Zweiflachprofil
- 17: Gewindeüberstand
- 18: Freistich
- 19: Loch
- 20: Freistich

## Patentansprüche

1. Schalteinheit (1) für ein Schaltgetriebe eines Kraftfahrzeugs mit zumindest einer Schaltwelle (2), wobei zumindest ein Schalthebel (3) zur Übertragung eines Drehmoments und zumindest ein Eingriffselement (5) zur Übertragung einer Kraft in Längsachsenrichtung der Schaltwelle (2) auf dieser angeordnet sind, **dadurch gekennzeichnet, dass** der Schalthebel (3) und das Eingriffselement (5) auf der Schaltwelle (2) koaxial aufgesteckt und längsaxial aneinander anliegend auf der Schaltwelle (2) drehfest miteinander verspannt sind, wobei das Eingriffselement (5) als eine hohlzylindrische Hülse (8) mit einem an einem Ende ausgebildeten radial außen überstehenden Kragen (9) ausgeführt ist.

2. Schalteinheit (1) nach Anspruch 1, **dadurch gekennzeichnet, dass** der Schalthebel (3) und das Eingriffselement (5) mittels zumindest einer Schraubenverbindung (7) auf der Schaltwelle (2) verschraubt sind.

3. Schalteinheit (1) nach Anspruch 1 oder 2, **dadurch gekennzeichnet, dass** an einem Ende der Schaltwelle (2) ein Gewindeabschnitt (13) mit einem Außengewinde (13a) vorgesehen ist.

4. Schalteinheit (1) nach einem der Ansprüche 1 bis 3, **dadurch gekennzeichnet, dass** zur Anlage des Eingriffselements (5) die Schaltwelle (2) zumindest eine Stufe (6) mit eingezogenem Durchmesser und mit einer längsaxialen Anlagefläche (6a) aufweist.

5. Schalteinheit (1) nach einem der Ansprüche 1 bis 4, **dadurch gekennzeichnet, dass** der Schalthebel (3) und das Eingriffselement (5) durch ein anliegend am Schalthebel (3) umgeformtes Ende der Schaltwelle (2) längsaxial auf dieser gesichert sind.

6. Schalteinheit (1) nach einem der Ansprüche 1 bis 5, **dadurch gekennzeichnet, dass** der Schalthebel (3) und das Eingriffselement (5) mittels zumindest einer Sicherungsscheibenverbindung und/oder zumindest einer Sicherungsringverbindung auf der Schaltwelle (2) in Längsachsenrichtung gesichert sind.

7. Schalteinheit (1) nach einem der Ansprüche 1 bis 6, **dadurch gekennzeichnet, dass** der Schalthebel (3) einteilig und eben ausgeführt ist sowie in Richtung seiner Längsachse ausgehend von seinem an der Schaltwelle (2) aufgesteckten Endabschnitt (3a) mit zu seinem von diesem abgewandten Endabschnitt (3b) hin in Querachsenrichtung mit reduziertem Außenmaß ausgebildet ist.

8. Schalteinheit (1) nach Anspruch 1, **dadurch gekennzeichnet, dass** die Hülse (8) mit ihrem vom Kragen (9) abgewandten Ende (11) am Schalthebel (3) anliegt und zwischen dem Kragen (9) und dem Schalthebel (3) eine Eingriffsnut (10) bildet.

9. Schalteinheit (1) nach Anspruch 8, **dadurch gekennzeichnet, dass** die Hülse (8) mit einem nach radial innen weisenden Abschnitt (8a) ausgebildet ist, über den die Hülse (8) an der Schaltwelle (2) anlegbar ist.

10. Schalteinheit (1) nach Anspruch 8 oder 9, **dadurch gekennzeichnet, dass** die Hülse (8) an ihrem vom Kragen (9) abgewandten Ende (11) einen nach radial innen gewölbten radialen Überstand (11a) aufweist und an einem Überstand (11a) an der Stufe (6) der Schaltwelle (2) längsaxial anlegbar ist.

11. Schalteinheit (1) nach einem der Ansprüche 8 bis 10, **dadurch gekennzeichnet, dass** die Hülse (8) als Blechteil ausgeführt und in einem blechverarbeitenden Verfahren in einem Schritt herstellbar ist.

## Claims

1. Shift unit for a shift transmission of a motor vehicle, having at least one shift shaft (2), wherein at least one shift lever (3) for transmitting a torque and at least one engagement element (5) for transmitting a force in the longitudinal axial direction of the shift shaft (2) are arranged on said shift shaft (2), **characterized in that** the shift lever (3) and the engagement element (5) are mounted coaxially on the shift shaft (2) and are clamped to one another, so as to bear longitudinally axially against one another, on the shift shaft (2) for conjoint rotation, the engagement element (5) being designed as a hollow cylindrical sleeve (8) with a radially outwardly projecting collar (9) formed on one end.

2. Shift unit (1) according to Claim 1, **characterized in that** the shift lever (3) and the engagement element (5) are screwed to the shift shaft (2) by means of at least one screw connection (7).

3. Shift unit (1) according to Claim 1 or 2, **characterized in that** a threaded section (13) with an external thread (13a) is provided on one end of the shift shaft (2).

4. Shift unit (1) according to one of Claims 1 to 3, **characterized in that**, for the abutment of the engagement element (5), the shift shaft (2) has at least one step (6) with a reduced diameter and with a longitudinal axial abutment surface (6a).

5. Shift unit (1) according to one of Claims 1 to 4, **characterized in that** the shift lever (3) and the engagement element (5) are secured longitudinally axially on the shift shaft (2) by means of an end of said shift shaft (2) deformed so as to bear against the shift lever (3).

6. Shift unit (1) according to one of Claims 1 to 5, **characterized in that** the shift lever (3) and the engagement element (5) are secured in the longitudinal axial direction on the shift shaft (2) by means of at least one locking disc connection and/or at least one locking ring connection.

7. Shift unit (1) according to one of Claims 1 to 6, **characterized in that** the shift lever (3) is in one piece and of planar form and, in the direction of its longitudinal axis, proceeding from its end section (3a) mounted on the shift shaft (2) towards its end section (3b) facing away therefrom, is formed with a reduced outer dimension in the transverse axial direction.

8. Shift unit (1) according to Claim 1, **characterized in that** the sleeve (8) bears with its end (11) facing away from the collar (9) against the shift lever (3), and an engagement groove (10) is formed between the collar (9) and the shift lever (3).

9. Shift unit (1) according to Claim 8, **characterized in that** the sleeve (8) is formed with a radially inwardly pointing section (8a) by means of which the sleeve (8) can be placed in abutment with the shift shaft (2).

10. Shift unit (1) according to Claim 8 or 9, **characterized in that** the sleeve (8) has, at its end (11) facing away from the collar (9), a radially inwardly arched radial projecting length (11a) and, at a projecting length (11a), can be placed longitudinally axially in abutment with the step (6) of the shift shaft (2).

11. Shift unit (1) according to one of Claims 8 to 10, **characterized in that** the sleeve (8) is formed as a sheet-metal part and can be produced in one step in a sheet-metal forming process.

## Revendications

1. Unité de changement de vitesse (1) pour une boîte de vitesses d'un véhicule automobile, comprenant au moins un arbre de changement de vitesse (2), dans laquelle au moins un levier de sélection (3) pour le transfert d'un couple et au moins un élément d'engagement (5) pour le transfert d'une force dans la direction de l'axe longitudinal de l'arbre de changement de vitesse (2) sont disposés sur ce dernier, **caractérisée en ce que** le levier de sélection (3) et l'élément d'engagement (5) sont enfichés coaxialement sur l'arbre de changement de vitesse (2) et sont serrés de manière solidaire en rotation l'un avec l'autre sur l'arbre de changement de vitesse (2) en s'appliquant l'un contre l'autre dans la direction longitudinale axiale, l'élément d'engagement (5) étant réalisé sous forme de douille cylindrique creuse (8) avec un col (9) saillant radialement vers l'extérieur réalisé à une extrémité.

2. Unité de changement de vitesse (1) selon la revendication 1, **caractérisée en ce que** le levier de sélection (3) et l'élément d'engagement (5) sont vissés sur l'arbre de changement de vitesse (2) au moyen d'au moins une connexion vissée (7).

3. Unité de changement de vitesse (1) selon la revendication 1 ou 2, **caractérisée en ce qu'**une portion filetée (13) avec un filetage externe (13a) est prévue à une extrémité de l'arbre de changement de vitesse (2).

4. Unité de changement de vitesse (1) selon l'une quelconque des revendications 1 à 3, **caractérisée en ce que** pour l'application de l'élément d'engagement (5), l'arbre de changement de vitesse (2) présente au moins un étage (6) avec un diamètre réduit et une surface d'appui (6a) longitudinale axiale.

5. Unité de changement de vitesse (1) selon l'une quelconque des revendications 1 à 4, **caractérisée en ce que** le levier de sélection (3) et l'élément d'engagement (5) sont fixés axialement longitudinalement sur l'arbre de changement de vitesse (2) par une extrémité de l'arbre de changement de vitesse (2) façonnée s'appuyant sur le levier de sélection (3).

6. Unité de changement de vitesse (1) selon l'une quelconque des revendications 1 à 5, **caractérisée en ce que** le levier de sélection (3) et l'élément d'engagement (5) sont fixés au moyen d'au moins une connexion à rondelle de fixation et/ou d'au moins une connexion à bague de fixation sur l'arbre de changement de vitesse (2) dans la direction de l'axe longitudinal.

7. Unité de changement de vitesse (1) selon l'une quelconque des revendications 1 à 6, **caractérisée en ce que** le levier de sélection (3) est réalisé d'une seule pièce et de manière uniforme et est réalisé dans la direction de son axe longitudinal avec une dimension extérieure réduite dans la direction de l'axe transversal à partir de sa portion d'extrémité (3a) enfichée sur l'arbre de changement de vitesse (2) jusqu'à sa portion d'extrémité (3b) opposée à celle-ci.

8. Unité de changement de vitesse (1) selon la revendication 1, **caractérisée en ce que** la douille (8) s'applique avec son extrémité (11) opposée au col (9) contre le levier de sélection (3) et forme entre le col (9) et le levier de sélection (3) une rainure d'engagement (10).

9. Unité de changement de vitesse (1) selon la revendication 8, **caractérisée en ce que** la douille (8) est réalisée avec une portion (8a) tournée radialement vers l'intérieur, par le biais de laquelle la douille (8) peut être appliquée contre l'arbre de changement de vitesse (2).

10. Unité de changement de vitesse (1) selon la revendication 8 ou 9, **caractérisée en ce que** la douille (8) présente sur son extrémité (11) opposée au col (9) un dépassement (11a) radial courbé radialement vers l'intérieur, et peut être appliquée longitudinalement axialement au niveau d'un dépassement (11a) contre l'étage (6) de l'arbre de changement de vitesse (2).

11. Unité de changement de vitesse (1) selon l'une quelconque des revendications 8 à 10, **caractérisée en ce que** la douille (8) est réalisée sous forme de pièce en tôle et peut être fabriquée en une seule passe dans un procédé de traitement de tôle.
